# EUROPÄISCHE PATENTSCHRIFT

(11) **EP 1 744 850 B1**
(45) Veröffentlichungstag und Bekanntmachung des Hinweises auf die Patenterteilung: **26.11.2008**
(21) Anmeldenummer: 05739882.8
(22) Anmeldetag: 11.05.2005
(51) Int. Cl.: B23K 10/00

(54) **WASSERDAMPF-SCHNEIDGERÄT**
STEAM CUTTING DEVICE
OUTIL DE COUPE A LA VAPEUR D'EAU

(30) Priorität: 13.05.2004 AT 8372004
(43) Veröffentlichungstag der Anmeldung: 24.01.2007
(73) Patentinhaber: Fronius International GmbH, 4363 Pettenbach (AT)
(72) Erfinder: LANGEDER, Harald, A-4643 Pettenbach (AT); PAUSER, Heribert, A-3484 Grafenwörth (AT)
(74) Vertreter: Sonn & Partner Patentanwälte
(86) Internationale Anmeldenummer: PCT/AT2005/000159
(87) Internationale Veröffentlichungsnummer: WO 2005/110659

(56) Entgegenhaltungen:
- FR-A- 2 721 917
- US-A- 5 290 995
- US-B1- 6 326 581

## Beschreibung

Die Erfindung betrifft ein Wasserdampf-Schneidgerät gemäß dem Oberbegriff des Anspruchs 1, mit zumindest einem Behälter für eine Flüssigkeit, einer Stromquelle einer Steuervorrichtung und einem über eine Versorgungsleitung mit dem Behälter verbundenen Brenner, zur Erzeugung eines über eine Düse austretenden Wasserdampfstrahls.

Der Behälter für die Flüssigkeit, die Stromquelle und die Steuervorrichtung sind üblicherweise in einem Grundgerät angeordnet, welches mit dem Brenner über entsprechende Leitungen verbunden ist.

Aus der AT 406 559 B ist ein Brenner für ein Wasserdampf-Schneidverfahren zum Anschluss an eine Steuervorrichtung und ein Versorgungsgerät bekannt. Dabei ist im Brenner eine Kathode und gegebenenfalls eine Anode, ein Flüssigkeitsversorgungssystem und ein Kanal, welcher sich im Bereich der Kathode erstreckt, angeordnet. Der Kanal ist mit einer Versorgungsleitung des Flüssigkeitsversorgungssystems verbindbar. Der Brenner bzw. der Kanal weist dabei einen Fließkanal bzw. einen Strömungskanal oder eine Längsrille auf. Der Kanal erstreckt sich von der Anode bzw. der Kathode in Richtung der Versorgungsleitung, wobei der Kanal zwischen der Kathode bzw. einer Kathodenhülse und einem Verdampfungselement angeordnet ist. Der Kanal dient dabei zur Umwandlung der Flüssigkeit in ein Gas. Dies erfolgt zwischen dem Eintritt in den Fließkanal bzw. den Strömungskanal oder der Längsrille und dem Zwischenraum zwischen der Kathode und der Anode.

Nachteilig bei diesem Brenner ist, dass nach Beendigung des Wasserdampf-Schneidverfahrens, also beim Ausschalten des Brenners oder im Standby-Betrieb, im Brenner bzw. in der Versorgungsleitung der Druck aufrecht erhalten bleibt. Dadurch erfolgt ein Nachdampfen und unter Umständen ein Flüssigkeitsaustritt aus dem Brenner, wodurch nennenswerte Mengen der für das Wasserdampf-Schneiden benötigten Flüssigkeit verloren gehen können. Weiters sinkt bei abnehmendem Druck im Brenner und in der Versorgungsleitung die Siedetemperatur der Flüssigkeit im Brenner, so dass durch den heißen Brenner automatisch eine weitere Umwandlung der Flüssigkeit in den gasförmigen Zustand bewirkt wird, wodurch eine unbestimmte Zeit lang ein Nachdampfen der Flüssigkeit erfol-gen kann und des Weiteren bei weiterem Abkühlen des Brenners die Flüssigkeit wiederum in flüssigen Zustand umgewandelt wird und austreten kann. Dies hat zur Folge, dass der Brenner dadurch noch rascher abgekühlt wird, wodurch ein Neustart des Wasserdampf-Schneidverfahrens erheblich verzögert wird. Auch liegt die Problematik darin, dass durch den Flüssigkeitsaustritt aus der Versorgungsleitung bei einem Neustart erst wieder eine entsprechende Flüssigkeitsversorgung aufgebaut werden muss, da keine bzw. nur mehr eine geringe Menge von Flüssigkeit in der Versorgungsleitung vorhanden ist. Aus der eingangs genannten Patentschrift gehen keine Details über die Flüssigkeitsversorgung des Wasserdampf-Schneidgerätes zum Brenner hervor. Lediglich auf den Aufbau des Brenners wird in der Patentschrift genau eingegangen.

Auch die US 5 290 995 A beschreibt ein Wasserdampf-Schneidgerät der gegenständlichen Art gemäß dem Oberbegriff des Anspruchs 1 bei welchem jedoch auch das Problem bei welchem jedoch auch das Problem des Nachdampfens und des Flüssigkeitsaustritts aus dem Brenner nach Beendigung des Schneidverfahrens auftreten kann.

Die Aufgabe der vorliegenden Erfindung besteht daher in der Schaffung eines Wasserdampf-Schneidgerätes, bei welchem sich im Standby-Betrieb und nach dem Ausschalten des Wasserdampf-Schneidgerätes möglichst wenig bis keine Flüssigkeit im Brenner befindet. Weiters soll eine möglichst geringe Menge an Flüssigkeit nach der Beendigung des Wasserdampf-Schneidverfahrens aus dem Brenner austreten. Schließlich soll die Flüssigkeitsversorgung für das Wasserdampf-Schneidgerät möglichst unabhängig von einem allfälligen Höhenunterschied zwischen dem im Grundgerät befindlichen Behälter für die Flüssigkeit und dem Brenner sein.

Der Vorteil liegt darin, dass aufgrund der Entlastungsleitung der im Brenner bzw. in der Versorgungsleitung des Brenners vorherrschende Druck der Flüssigkeit nach dem Beenden des Schneidprozesses reduziert bzw. abgebaut wird. Überschüssige Flüssigkeit, welche sich nach Beendigung des Schneidverfahrens noch im Brenner und in der Versorgungsleitung befindet, wird über die Entlastungsleitung abgeführt. Der Brenner und auch die Versorgungsleitung werden dadurch nach Beendigung des Wasserdampf-Schneidverfahrens entlastet, wodurch nur nach dem Betrieb des Wasserdampf-Schneidgerätes wenig bzw. keine Flüssigkeit aus dem Brenner bzw. aus der Düse des Brenners, austritt. Weiters kann ein allfälliger Druckanstieg im Brenner, wie er beispielsweise bei Benutzung des Brenners an einer gegenüber dem Behälter tieferliegenden Schneidstelle auftritt über die Entlastungsleitung auf einfache Art und Weise abgeführt werden. Dadurch, dass der Querschnitt der Entlastungsleitung größer als der Querschnitt der Düsenaustrittsöffung im Brenner ist, wird eine beschleunigte Entlastung des Brenners und der Versorgungsleitung erzielt, da aufgrund des größeren Querschnittes der Entlastungsleitung mehr Flüssigkeit abgeführt werden kann.

Wenn die Entlastungsleitung mit der Versorgungsleitung im Brenner oder im Bereich des Brenners verbunden ist erfolgt die Entlastung im Wasserdampf-Schneidgerät am effektivsten. Somit wird erreicht, dass nur eine kurze Versorgungsstrecke von der Flüssigkeitsaustrittsstelle am Brenner zur Entlastungsleitung vorhanden ist und somit dieser Druck sehr schnell abgebaut werden kann, und keine bzw. nur eine geringe Menge von Flüssigkeit nach Beenden des Schneidprozesses austreten kann.

Vorteilhafterweise ist der Querschnitt der Entlastungsleitung auch größer als der Querschnitt der Versorgungsleitung. Dadurch wird eine weitere Beschleunigung der Entlastung des Brenners und der Versorgungsleitung erzielt, da aufgrund des größeren Querschnittes der Entlastungsleitung mehr Flüssigkeit abgeführt werden kann.

Gemäß einem weiteren Merkmal der Erfindung ist in der Versorgungsleitung eine Pumpe zum Aufbau des im Brenner bzw. in der dem Brenner zugewandten Versorgungsleitung notwendigen Betriebsdrucks der Flüssigkeit angeordnet. Dadurch kann in einfacher Art und Weise der für das Wasserdampf-Schneidverfahren notwendige Druck im Flüssigkeitsversorgungssystem aufgebaut werden.

Eine Steuerung der Entlastung in Abhängigkeit des Wasserdampf-Schneidverfahrens ist dann möglich, wenn in der Entlastungsleitung beispielsweise ein Sperrventil, ein Regelventil oder ein Strömungswiderstand angeordnet ist.

Eine Anpassung des Druckes der Flüssigkeit auf einen gewünschten Betriebsdruck kann durch einen Druckminderer erfolgen. Dadurch kann auch eine automatische Druckanpassung vom Wasserdampf-Schneidgerät auf einfache und kostengünstige Weise geschaffen werden. Ein weiterer Vorteil liegt darin, dass vom Benutzer keine Einstellung mehr vorgenommen werden muss und somit Bedienfehler ausgeschlossen werden können.

Durch den Einsatz einer Pumpe, die zur Förderung der Flüssigkeit in beiden Flussrichtungen ausgebildet ist, kann die Entlastungsleitung durch die Versorgungsleitung gebildet und können zusätzliche Bauelemente, beispielsweise Ventile, usw., eingespart werden.

Wenn die Entlastungsleitung mit dem Behälter verbunden ist, so dass die Flüssigkeit bei der Entlastung über die Entlastungsleitung in den Behälter rückführbar ist, geht keine Flüssigkeit verloren und kann diese für den nächsten Schneidprozess wiederverwendet werden.

Der Behälter kann beispielsweise durch eine Gasflasche oder Gaskartusche gebildet sein und es kann im Behälter ein vordefinierter Druck aufgebaut sein. Somit wird lediglich durch das öffnen eines Ventils die Flüssigkeit Richtung Brenner geführt, wodurch keine aufwendige und teure Pumpe mehr notwendig ist.

Durch eine Konstruktion mit einem Rückschlagventil in der Versorgungsleitung und allenfalls in der Entlastungsleitung, welche bei einem vorbestimmten Druck in eine Richtung automatisch öffnen und in die entgegengesetzte Richtung sperren, wird eine einfache, kostengünstige und automatische Druckanpassung und Entlastung des Wasserdampf-Schneidgerätes erreicht.

Vorteilhafterweise wird die Flüssigkeit durch Wasser gebildet. Dadurch sind keine teuren Flüssigkeiten in bestimmten Zusammensetzungen notwendig und der Benutzer kann beispielsweise Leitungswasser für den Schneidprozess verwenden.

Um auf möglichst einfache und kostengünstige Weise eine Verkalkung und Verschmutzung des Flüssigkeitsversorgungssystems und des Brenners zu verhindern, ist gemäß einem weiteren Merkmal der Erfindung ein Filter zur Reinigung der Flüssigkeit vorzugsweise im Behälter und/oder in der Vorsorgungsleitung und/oder in der Entlastungsleitung und/oder einem Nachfüllbehälter angeordnet.

Wenn ein Sensor zur Erfassung des Drucks im Brenner und/oder in der Versorungsleitung und/oder in der Entlastungsleitung vorgesehen ist, können diese Werte an die Steuervorrichtung weitergegeben werden und somit ein Regelkreis aufgebaut werden. Anstelle des Drucks oder zusätzlich dazu kann auch die Durchflussmenge der Flüssigkeit von einem Sensor erfasst werden. Die mit dem Sensor verbundene Steuervorrichtung ist zum Aufbau des Regelkreises mit der Pumpe und/oder dem Regelventil und/oder dem Sperrventil und/oder dem Strömungswiderstand und/oder dem Druckminderer zur druckabhängigen Regelung verbunden. Somit ist eine automatische Anpassung an die erforderlichen Werte in einfacher Art und Weise geschaffen. Ein weiterer Vorteil liegt darin, dass dadurch die Möglichkeit vorhanden ist, dass der Benutzer eine Druckeinstellung für die Flüssigkeitsversorgung durchführen kann, so dass dieser den Druck an die entsprechenden Gegebenheiten anpassen kann.

Durch einen Verdampfer in der Versorgungsleitung kann das Wasserdampf-Schneidgerät wesentlich länger ohne Reinigung eingesetzt werden. Somit ist die Betriebs- und Einsatzdauer wesentlich verlängert.

Wenn eine Einrichtung zur Erfassung und Verarbeitung der Betriebsparameter des Wasserdampf-Schneidgerätes vorgesehen sind, kann der Druck im Brenner bzw. in der Versorgungsleitung auch ohne Drucksensor über die Betriebsparameter des Wasserdampf-Schneidgerätes ermittelt bzw. errechnet werden. Dadurch muss lediglich eine Rechenroutine im Wasserdampf-Schneidgerät programmiert und gespeichert werden. Das Wasserdampf-Schneidgerät kann dann automatisch über die ermittelten bzw. errechneten Werte reagieren und somit eine einfache und kostengünstige Steuerung und Regelung schaffen.

Die vorliegende Erfindung wird anhand der beigefügten Zeichnungen näher erläutert. Darin zeigen:
Fig.1 eine schematische Darstellung eines Wasserdampf-Schneidgerätes und
Fig.2 bis 11 schematische Darstellungen verschiedener Ausführungsformen erfindungsgemäßer Wasserdampf-Schneidgeräte mit Flüssigkeitsrückführung.

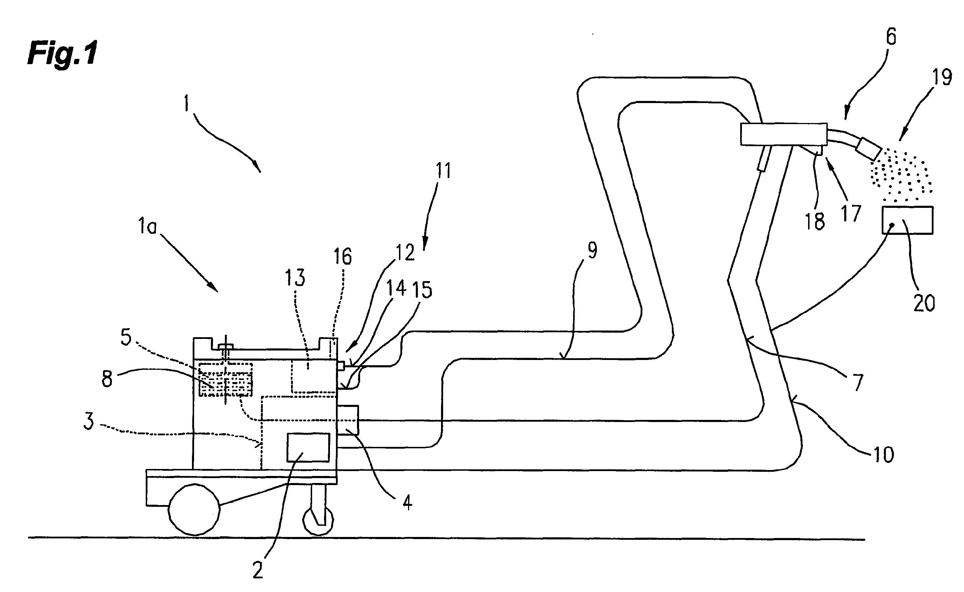

In Fig. 1 ist ein Wasserdampf-Schneidgerät 1 mit einem Grundgerät 1a für ein Wasserdampf-Schneidverfahren gezeigt. Das Grundgerät 1a umfasst eine Stromquelle 2, eine Steuervorrichtung 3 und ein der Steuervorrichtung 3 zugeordnetes Sperrelement 4. Das Sperrelement 4 ist mit einem Behälter 5 und einem Brenner 6 über eine Versorgungsleitung 7 verbunden, so dass der Brenner 6 mit einer im Behälter 5 angeordneten Flüssigkeit 8 versorgt werden kann. Die Versorgung des Brenners 6 mit Energie, insbesondere mit Strom und Spannung, erfolgt über Leitungen 9, 10 von der Stromquelle 2.

Zum Kühlen des Brenners 6 ist dieser über einen Kühlkreislauf 11 allenfalls unter Zwischenschaltung eines Strömungswächters 12 mit einem Flüssigkeitsbehälter 13 verbunden. Bei der Inbetriebnahme des Brenners 6 bzw. des Grundgerätes 1a kann der Kühlkreislauf 11 von der Steuervorrichtung 3 gestartet und somit eine Kühlung des Brenners 6 über den Kühlkreislauf 11 erreicht werden. Zur Bildung des Kühlkreislaufs 11 wird der Brenner 6 über Kühlleitungen 14, 15 mit dem Flüssigkeitsbehälter 13 verbunden.

Weiters weist das Grundgerät 1a eine Eingabe- und/oder Anzeigevorrichtung 16 auf, über welche die unterschiedlichsten Parameter bzw. Betriebsarten des Wasserdampf-Schneidgerätes 1 eingestellt werden können. Dabei werden die über die Eingabe-und/oder Anzeigevorrichtung 16 eingestellten Parameter an die Steuervorrichtung 3 weitergeleitet, worauf von der Steuervorrichtung 3 die einzelnen Komponenten des Wasserdampf-Schneidgerätes 1 angesteuert werden können.

Selbstverständlich muss der Brenner 6 nicht, wie im dargestellten Ausführungsbeispiel gezeigt, über einzelne Leitungen 7, 9, 10, 14, 15 mit dem Grundgerät 1a verbunden sein, sondern können die einzelnen Leitungen 7, 9, 10, 14, 15 auch in einem gemeinsamen Schlauchpaket (nicht dargestellt) zusammengefasst werden, welches mit dem Brenner 6 und dem Grundgerät 1a über eine Kupplungsvorrichtung, insbesondere über Anschlussstecker, angeschlossen wird.

Weiters kann der Brenner 6 zumindest ein Bedienungselement 17, insbesondere einen Taster 18, aufweisen. Über das Bedienungselement 17, insbesondere den Taster 18, kann der Benutzer durch Aktivieren und/oder Deaktivieren des Tasters 18 der Steuervorrichtung 3 vom Brenner 6 aus mitteilen, dass ein Wasserdampf-Schneidverfahren gestartet bzw. durchgeführt werden soll. Des Weiteren können an der Eingabe- und/oder Anzeigevorrichtung 16 beispielsweise Voreinstellungen getroffen werden, insbesondere das zu schneidende Material, die verwendete Flüssigkeit und beispielsweise Kennlinien des Stromes und der Spannung vordefiniert werden. Selbstverständlich können weitere Bedienelemente am Brenner 6 angeordnet sein, über die ein oder mehrere Betriebsparameter des Wasserdampf-Schneidgerätes 1 vom Brenner 6 aus eingestellt werden. Hierzu können diese Bedienelemente direkt über Leitungen oder über ein Bussystem mit dem Grundgerät 1a, insbesondere der Steuervorrichtung 3, verbunden sein.

Die Steuervorrichtung 3 aktiviert nach dem Betätigen des Tasters 18 die einzelnen für das Wasserdampf-Schneidverfahren benötigten Komponenten. Beispielsweise werden zuerst eine Pumpe (nicht dargestellt), das Sperrelement 4 sowie die Stromquelle 2 angesteuert, wodurch eine Versorgung des Brenners 6 mit der Flüssigkeit 8 sowie mit elektrischer Energie eingeleitet wird. Anschließend aktiviert die Steuervorrichtung 3 den Kühlkreislauf 11, so dass eine Kühlung des Brenners 6 ermöglicht wird. Durch die Versorgung des Brenners 6 mit der Flüssigkeit 8 und mit Energie, insbesondere mit Strom und Spannung, wird nunmehr im Brenner 6 die Flüssigkeit 8 in ein Gas 19, insbesondere in Plasma, mit hoher Temperatur umgewandelt, so dass durch das aus dem Brenner 6 ausströmende Gas 19 ein Schneidprozess an einem Werkstück 20 durchgeführt werden kann. Der genaue Ablauf zur Umwandlung der Flüssigkeit 8 in das Gas 19 kann der AT 406 559 B der Anmelderin entnommen werden.

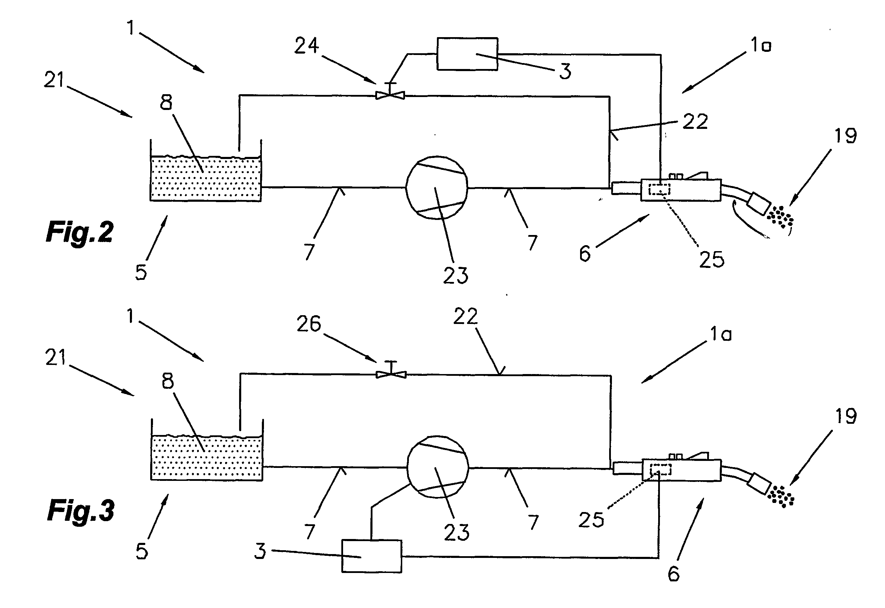

Die Fig. 2 bis 11 zeigen nunmehr schematische Darstellungen eines erfindungsgemäßen Wasserdampf-Schneidgerätes 1 mit einer Flüssigkeitsrückführung 21, um das Wasserdampf-Schneidgerät 1 nach dem Wasserdampf-Schneidverfahren zu entlasten.

Die Flüssigkeit 8 wird mit Hilfe zumindest einer Pumpe 23 vom Behälter 5 über die Versorgungsleitung 7 dem Brenner 6 zugeführt. Im Brenner 6 wird die Flüssigkeit 8 verdampft und ein Gasstrahl bzw. das Gas 19 tritt mit hoher Temperatur aus dem Brenner 6 aus. Die Pumpe 23 kann dabei durch jede aus dem Stand der Technik bekannte Konstruktion gebildet sein und wird in den nachfolgenden Fig. 2 bis 11 schematisch und vereinfacht dargestellt. Über die zumindest eine Pumpe 23 wird der notwendige Betriebsdruck für das Wasserdampf-Schneidverfahren im Brenner 6 bzw. in der dem Brenner 6 zugewandten Seite der Versorgungsleitung 7 aufgebaut.

Nach Beendigung des Wasserdampf-Schneidverfahrens ist der Druck für die Flüssigkeitsversorgung auch bei deaktivierter Pumpe 23 im Brenner 6 und der Versorgungsleitung 7, insbesondere auf der Druckseite der Versorgungsleitung 7, immer noch aufgebaut. Dies resultiert daraus, dass die Versorgungsleitung durch den beim Schneidprozess aufgebauten Druck gedehnt wird, und nach Beendigung des Schneidprozesses, bzw. des Flüssigkeitstransportes, sich die Versorgungsleitung 7 in den ursprünglichen Zustand zurück verformt, wodurch die in der Versorgungsleitung 7 vorhandene Flüssigkeit 8 in den Brenner 6 gedrückt wird. Der Brenner 6 wird also nach Beendigung des Schneidprozesses über eine kurze Zeitdauer auch ohne neuerliche Zufuhr von Flüssigkeit 8 aus dem Behälter 5 von der in der Versorgungsleitung 7 befindlichen Flüssigkeit 8 versorgt. Des Weiteren ist im Brenner 6 ein Gaspolster vorhanden, welcher abgebaut werden muss.

Der Druck bzw. das Gaspolster im Brenner 6 kann dabei nur über die Düse des Brenners 6 abgebaut werden. Aufgrund des geringen Querschnitts der Düsenaustrittsöffnung dauert der Druckabbau relativ lang, so dass ein langes Nachdampfen die Folge ist. Hierzu ist zu erwähnen, dass bei Flüssigkeiten 8 die Siedetemperatur bei höherem Druck steigt und bei abnehmendem Druck fällt d.h., dass nach dem Beenden des Schneidprozesses der Druck in der Versorgungsleitung 7 und im Brenner 6 durch ausströmendes Gas sich selbständig verringert, so dass die teilweise überhitzte Flüssigkeit 8 immer weiter siedet und verdampft und somit dieser Dampf bzw. das Gas 9 aus dem Brenner 6 weiter ausströmt, also sozusagen nachdampft.

Ein wesentlicher Nachteil des Nachdampfens liegt darin, dass dadurch der Brenner 6 wesentlich schneller gekühlt wird, wodurch beispielsweise bei Standby-Betrieb der Brenner 6 so weit abkühlt, dass bei einem Neustart der Brenner 6 erneut erwärmt werden muss, wodurch sich wesentlich längere Startphasen ergeben.

Um dieses Nachdampfen zu verhindern, bzw. zu reduzieren, wird nun nach der Beendigung des Wasserdampf-Schneidverfahrens über eine Entlastungsleitung 22 die unter Druck stehende Flüssigkeit 8 im Brenner 6 und in der Versorgungsleitung 7 entlastet, bzw. der Druck abgebaut. Vorteilhafterweise ist die Entlastungsleitung 22 mit der Versorgungsleitung 7 im oder nahe am Brenner 6 verbunden. Die Entlastungsleitung 22 ist gegenüber der Versorgungsleitung 7 entkoppelt, indem in der Entlastungsleitung 22 ein Sperrglied angeordnet ist, so dass sich in der Entlastungsleitung 22 kein Druck während der Flüssigkeitsversorgung für einen Schneidprozess aufbauen kann. Die Druckentlastung geschieht insofern, da die Entlastungsleitung 22 nicht unter Druck steht, so dass beim Aktivieren des Sperrgliedes, was bei einer Beendigung des Schneidprozesses automatisch erfolgt, sich der Druck in Versorgungsleitung 7 und dem Brenner 6 in die Entlastungsleitung 22 abbaut. Dadurch wird die Flüssigkeit 8 von der Versorgungsleitung 22 und dem Brenner 6 regelrecht in die Entlastungsleitung gesaugt, so dass kein bzw. nur ein sehr geringes Nachdampfen auftritt. Durch das geringe Nachdampfen wird der Brenner 6 weniger stark abgekühlt, so dass bei einem Neustart, also bei kurzen Schneidunterbrechungen, ein schnelles Erwärmen des Brenners 6 und somit eine schnellere Erwärmung der Flüssigkeit 8 auf die Siedetemperatur erzielt wird. Dabei wird wesentlich weniger Energie benötigt als bei einer Neuerwärmung des Brenners 6. Natürlich ist es auch möglich, mittels im Brenner 6 angeordneten Heizelementen (nicht dargestellt) die Temperatur des Brenners 6 während des Standby-Betriebes auf Temperatur zu halten.

Die Entlastungsleitung 22 ist beispielsweise zwischen der Pumpe 23 und dem Brenner 6 mit der Versorgungsleitung 7 verbunden. Der Querschnitt der Entlastungsleitung 22 ist vorteilhafterweise größer als der Querschnitt der Düsenaustrittsöffnung und/oder der Versorgungsleitung 7, um einen schnelleren Abbau des Drucks im Brenner 6 und der Versorgungsleitung 7 zu gewährleisten. Selbstverständlich kann die Entlastungsleitung 22 auch einen gleichen oder kleineren Querschnitt wie die Düsenaustrittsöffnung und/oder Versorgungsleitung 7 aufweisen, wodurch allerdings der Druck langsamer abgebaut wird. Des Weiteren ist in der Entlastungsleitung 22 ein Regelventil 24 angeordnet, so dass bei Aktivierung des Regelventils 24, also nach Beendigung des Wasserdampf-Schneidverfahrens, der Druck in der Versorgungsleitung 7 und im Brenner 6 über die Entlastungsleitung 22 abgebaut wird.

Die Entlastungsleitung 22 ist möglichst nahe am Brenner 6 bzw. im Brenner 6 mit der Versorgungsleitung 7 verbunden. Die Entlastungsleitung 22 führt von der Versorgungsleitung 7 zu dem Behälter 5, in welchen die Flüssigkeit 8 wieder zurückgeführt wird. Hierbei ist die Flüssigkeit 8 drucklos im Behälter 5 angeordnet. Da die Flüssigkeit 8 im Behälter 5 ohne Druck, also unkomprimiert, der Pumpe 23 bereitgestellt wird, ist die Rückführung der Flüssigkeit von der Entlastungsleitung 22 zum Behälter 5 problemlos möglich. Die Entlastungsleitung 22 weist dabei ein Regelventil 24 auf, welches von der Steuervorrichtung 3 während des Wasserdampfschneidverfahrens angesteuert wird.

Des Weiteren kann zwischen dem Brenner 6 und der Entlastungsleitung 22, bevorzugt im Brenner 6 oder auch in der Versorgungsleitung 7 und/oder in der Entlastungsleitung 22 ein Sensor 25, beispielsweise ein Druck- und/oder Durchflusssensor, für die Flüssigkeitsversorgung angeordnet sein. Der Sensor 25 übermittelt die ermittelten Daten und Werte, also die aktuellen Druck- und/oder Durchflusswerte, an die Steuervorrichtung 3, so dass diese die einzelnen Komponenten entsprechend ansteuern kann. Beim Start eines Schneidprozesses ist das Regelventil 24 geschlossen, so dass über die Pumpe 23 der Druck der Flüssigkeit 8 in der Versorgungsleitung 7 aufgebaut werden kann. Gleichzeitig wird der Brenner 6 durch Beaufschlagung mit Energie erhitzt, so dass die zugeführte Flüssigkeit 8 in den gasförmigen Zustand umgewandelt werden kann und ein entsprechender heißer Plasmastrahl für den Schneidprozess gebildet wird. Durch den Sensor 25 wird der Druck in der Versorgungsleitung 7 überwacht, wodurch bei Druckschwankungen entsprechende Steuer- bzw. Regelvorgänge von der Steuervorrichtung 3 eingeleitet werden können. Tritt beispielsweise ein zu hoher Druck in der Versorgungsleitung 7 auf, wird über die Steuervorrichtung 3 das in der Entlastungsleitung 22 angeordnete Regelventil 24 geöffnet, wodurch der Druck der Flüssigkeit über die Entlastungsleitung 22 abgebaut werden kann. Wird vom Sensor 25 während des Wasserdampf-Schneidverfahrens erkannt, dass der vorgegebene Druck wieder erreicht wurde, schließt die Steuervorrichtung 3 das Regelventil 25 wieder. Somit wird über das Regelventil 24 der Druckhaushalt in der Versorgungsleitung 7 und im Brenner 6 gesteuert und die Flüssigkeit 8 dem Behälter 5 wieder rückgeführt. Beim Beenden des Schneidverfahrens wird das Regelventil 25 wieder geöffnet, so dass der Druck der Flüssigkeit 8 über die Entlastungsleitung 22 abgebaut und gleichzeitig die Flüssigkeit 8 von der Versorgungsleitung 7 und dem Brenner 6 in den Behälter 5 rückgeführt wird.

Natürlich ist es auch möglich, den Druck der Flüssigkeit 8 im Brenner 6 bzw. in der Versorgungsleitung 7 mittels laufend während des Wasserdampf-Schneidverfahrens ermittelten Betriebsparametern, wie beispielsweise Strom, Spannung und Zeit, zu berechnen. Somit wäre lediglich eine Variante, bzw. ein Programm im Speicher des Wasserdampf-Schneidgerätes 1 bzw. in der Steuervorrichtung 3 zu hinterlegen. Dadurch könnte beispielsweise der Sensor 25 eingespart und die Kosten reduziert werden. Somit wird ein Wasserdampf-Schneidgerät 1 mit einem einfachen Aufbau realisiert, bei welchem eine Entlastung des Brenners 6 und der Versorgungsleitung 7 nach dem Wasserdampf-Schneidverfahren erreicht wird.

Der Behälter 5 kann auch beispielsweise in Form einer Gasflasche ausgebildet sein. Für Wasserdampf-Schneidverfahren mit einer geringen notwendigen Menge an Flüssigkeit 8 kann so ein tragbares unabhängiges Wasserdampf-Schneidgerät 1 mit einer längeren Arbeitsdauer geschaffen werden. Der Behälter 5 kann dabei beispielsweise auswechselbar im Wasserdampf-Schneidgerät 1 angeordnet sein. Weiters ist der erfindungsgemäße Brenner 6 bzw. das Wasserdampf-Schneidgerät 1 nicht an einen Ort bzw. an Leitungen gebunden, wodurch der Brenner 6 bzw. das Wasserdampf-Schneidgerät 1 auch jederzeit an schwer zugänglichen Stellen, also schwer erreichbaren Einsatzorten zum Wasserdampf-Schneiden verwendet werden kann.

In Fig.3 ist ein weiteres Ausführungsbeispiel des erfindungsgemäßen Wasserdampf-Schneidgerätes 1 schematisch dargestellt. Hierbei ist wieder ein Behälter 5 für die Flüssigkeit 8 angeordnet, aus welchem die Flüssigkeit 8 mittels der Pumpe 23 über die Versorgungsleitung 7 zum Brenner 6 gefördert wird. Zur Entlastung des Brenners 6 ist bei diesem Ausführungsbeispiel in der Entlastungsleitung 22 ein Sperrventil 26 angeordnet, welches nach dem Wasserdampf-Schneidverfahren zur Druckentlastung der Versorgungsleitung 7 aktiviert wird. Die Pumpe 23 ist in diesem Ausführungsbeispiel mit der Steuervorrichtung 3 verbunden, so dass die Pumpe 23 in Abhängigkeit des vom Sensor 25 ermittelten Drucks der Flüssigkeit 8 geregelt werden kann. Dagegen erfolgt die Druckregelung beim Beispiel gemäß Fig. 2 über das Regelventil 24. Der Sensor 25 im Brenner 6 übermittelt die Druckwerte bzw. Istwerte an die Steuervorrichtung 3. Über die Pumpe 23 wird der Druckhaushalt in der Versorgungsleitung 7 und im Brenner 6 geregelt. Durch Regelung der Pumpe 23 wird eine Anpassung des Druckes in der Versorgungsleitung 7 und im Brenner 6 vorgenommen. Steigt beispielsweise der Druck in der Versorgungsleitung 7 und im Brenner 6 so wird dies vom Sensor 25 erkannt und an die Steuervorrichtung 3 weitergeleitet. Daraufhin wird von der Steuervorrichtung 3 die Drehzahl und/oder Durchflussmenge der Pumpe 23 reduziert. Fällt hingegen der Wert des Sensors 25, so wird von der Steuervorrichtung 3 die Drehzahl bzw. Durchflussmenge der Pumpe 23 erhöht. Dadurch wird eine ständige Anpassung der Drehzahl bzw. der Durchflussmenge der Pumpe 23 in Abhängigkeit des Druckes solange durchgeführt, bis der Ist-Wert mit einem eingestellten bzw. hinterlegten Sollwert für den Druck übereinstimmt. Beim Beenden des Schneidprozesses wird von der Steuervorrichtung 3 das Sperrventil 26 aktiviert, so dass ein Druckabbau über die drucklose Entlastungsleitung 22 erfolgt und die Flüssigkeit 8 in den Behälter 5 rückgefördert wird.

Somit ist wiederum ein einfacher und kompakter Aufbau des Wasserdampf-Schneidgerätes 1 geschaffen, wodurch ein tragbares Wasserdampf-Schneidgerät 1 aufgebaut werden kann, das auch an schwer zugänglichen Einsatzstellen Verwendung finden kann.

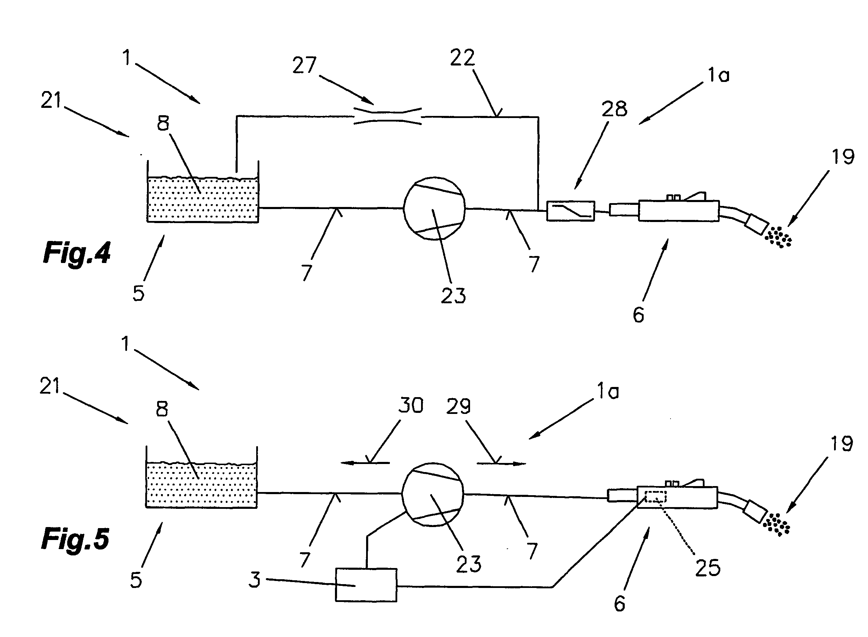

Anstelle des Sperrventils 26 kann gemäß Fig. 4 auch ein Strömungswiderstand 27 in der Entlastungsleitung 22 angeordnet und so eine Druckentlastung der Versorgungsleitung 7 und des Brenners 6 ermöglicht werden. Natürlich kann dabei auch ein aus dem Stand der Technik bekannter Druckminderer 28 vor oder im Brenner 6 zusätzlich zu dem Strömungswiderstand 27 angeordnet werden, wodurch eine einfache und kostengünstige Pumpe 23 eingesetzt werden kann. Dabei ist keine Steuerung bzw. Regelung der Pumpe 23 notwendig, da der Druck im Brenner 6 über den Druckminderer 28 geregelt wird. Natürlich kann aber auch in diesem Ausführungsbeispiel ein Sensor 25 angeordnet werden und der Druckhaushalt über die Pumpe 23 ohne Druckminderer 28 geregelt werden. Um eine sichere Entlastung des Wasserdampf-Schneidgerätes 1 in diesem Ausführungsbeispiel zu gewährleisten, kann natürlich der Strömungswiderstand 27 auch durch ein Regelventil 24 oder ein einfaches Sperrventil 26 ausgetauscht werden.

Gemäß Fig. 5 kann die Entlastung der Versorgungsleitung 7 und des Brenners 6 auch lediglich durch die Pumpe 23 erfolgen. Dabei wird die Pumpe 23 von der Steuervorrichtung 3 aufgrund der vom Sensor 25 ermittelten Daten geregelt. Die Pumpe 23 fördert dabei beim Start des Wasserdampf-Schneidverfahrens die Flüssigkeit 8 vom Behälter 5 zum Brenner 6 in Richtung des Pfeiles 29. Bei bzw. nach Beendigung des Wasserdampf-Schneidverfahrens fördert die Pumpe 23 die Flüssigkeit 8 wieder zurück in den Behälter 5 in Richtung des Pfeiles 30. Dies erfolgt durch den vorherrschenden Druck in der Versorgungsleitung 7 und im Brenner 6, wodurch eine Entlastung der Versorgungsleitung 7 und des Brenners 6 stattfindet. Hierbei muss die Pumpe 23 jedoch in ihrer Förderrichtung umkehrbar, also in beide Flussrichtungen, d.h., in Richtung des Brenners 6 entsprechend Pfeil 29 und in die entgegengesetzte Richtung entsprechend Pfeil 30, einsetzbar sein. Bei diesem Ausführungsbeispiel muss keine Entlastungsleitung 22 vorhanden sein, da die Flüssigkeit 8 zum und vom Brenner 6 alleine über die Pumpe 23 gefördert wird. Selbstverständlich kann aber eine Entlastungsleitung 22 zusätzlich angeordnet werden, so dass eine noch schnellere Entlastung der Versorgungsleitung 7 erzielt werden kann.

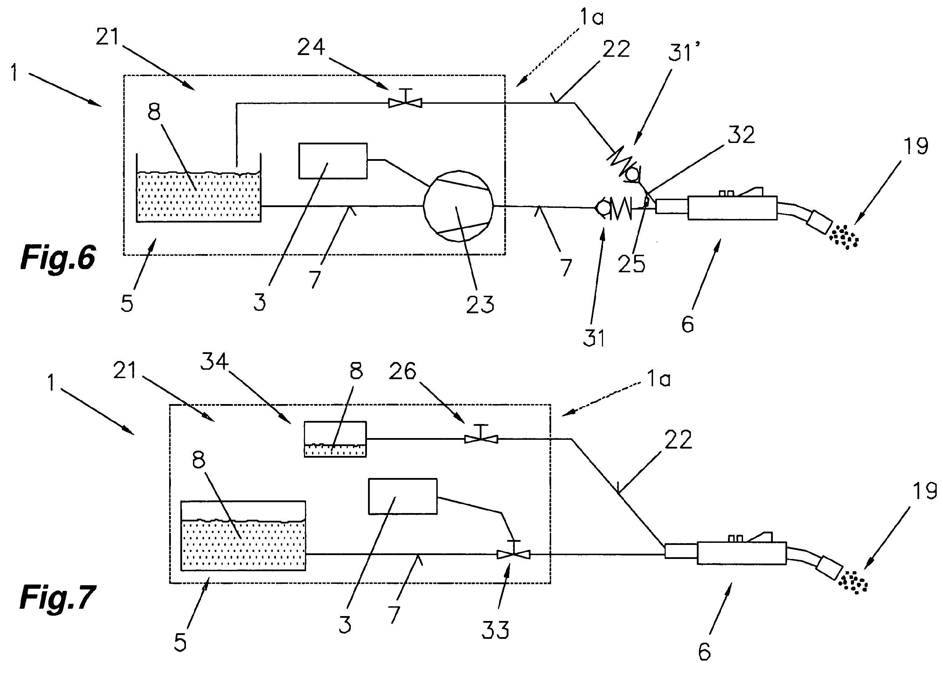

Fig.6 zeigt eine weitere Ausführungsvariante des erfindungsgemäßen Wasserdampf-Schneidgerätes 1, wobei in der Versorgungsleitung 7 und in der Entlastungsleitung 22 zumindest ein aus dem Stand der Technik bekanntes Rückschlagventil 31, 31' eingesetzt wird. Dabei ist die Entlastungsleitung 22 im Brenner 6 mit der Gaserzeugungskammer bzw. dem Kanal zum Umwandeln der Flüssigkeit 8 in den gasförmigen Zustand verbunden (nicht dargestellt).

Das Rückschlagventil 31 ist unmittelbar vor dem Brenner 6 in der Versorgungsleitung 7 so angeordnet, dass die Flussrichtung des Rückschlagventils 31 in Richtung des Brenners 6 zeigt. Das Rückschlagventil 31 öffnet vorzugsweise bei einem Druck von 0,01 bar bis 10 bar, insbesondere 1 bar, und versorgt somit den Brenner 6 mit der Flüssigkeit 8.

Nach Beendigung des Wasserdampf-Schneidverfahrens steht das Wasserdampf-Schneidgerät 1 jedoch noch immer unter Druck. Zur Entlastung des Wasserdampf-Schneidgerätes 1, bzw. des Brenners 6 ist in diesem Ausführungsbeispiel wiederum die Entlastungsleitung 22 angeordnet. In der Entlastungsleitung 22 ist im Bereich des Brenners 6 ein weiteres Rückschlagventil 31' angeordnet, wobei hierbei die Flussrichtung des Rückschlagventils 31' vom Brenner 6 weg, also in Richtung des Flüssigkeitsbehälters 5 verläuft. Das weitere in der Entlastungsleitung 22 angeordnete Rückschlagventil 31' öffnet dabei vorzugsweise bei einem Druck von 1 mbar bis 1000 mbar, insbesondere bei einem Druck von 50 mbar. In der Entlastungsleitung 22 ist weiters ein Regelventil 24 angeordnet, das nach Beendigung des Wasserdampf-Schneidverfahrens von der Steuervorrichtung 3 geöffnet wird, so dass nunmehr aufgrund des höheren Druckes im Brenner 6 das Rückschlagventil 31' der Entlastungsleitung 22 geöffnet wird und die Versorgungsleitung 7 entlastet. Die Entlastungsleitung 22 ist über eine weitere Leitung 32 mit der Versorgungsleitung 7 verbunden, wobei in dieser Leitung 32 der Sensor 25 angeordnet ist. Natürlich kann der Brenner 6 auch beispielsweise über eine Stichleitung versorgt werden, die von der Versorgungsleitung 7 und der Entlastungsleitung 22 abzweigt.

Ein wesentlicher Vorteil dieser Ausbildung ergibt sich dadurch, dass das Wasserdampf-Schneidgerät 1 mit der Flüssigkeitsrückführung 21 von der Höhe der Anwendung, also vom Höhenunterschied zwischen dem Behälter 5 und dem Brenner 6, unabhängig angewendet werden kann, da aufgrund des Rückschlagsventils 31 der jeweils für das Wasserdampf-Schneidverfahren notwendige Druck in der Versorgungsleitung 7 vorherrscht. Somit wird die Flüssigkeit 8 dem Brenner 6 mit dem richtigen Druck zur Verfügung gestellt. Des weiteren wird aufgrund des bei geringem Druck öffnendem Rückschlagventils 31' in der Entlastungsleitung 22 ebenfalls eine von der Höhe der Anwendung des Wasserdampf-Schneidgerätes 1 unabhängige und weiters sichere Entlastung der Versorgungsleitung 7 gewährleistet.

Ein weiterer Vorteil ergibt sich dadurch, dass die Flüssigkeit 8 von der Entlastungsleitung 22 in den Behälter 5 rückgeführt wird, da der Behälter 5 nicht unter Druck steht und somit die in der Versorgungsleitung 7 vorhandene überschüssige Flüssigkeit 8 problemlos wieder in den Behälter 5 eingebracht werden kann. Somit wird erreicht, dass beim Entlasten des Brenners 6 bzw. der Versorgungsleitung 7 keine Flüssigkeit 8 verloren geht. Des weiteren ist von Vorteil, dass die Flüssigkeit 8 nach dem Beenden des Wasserdampf-Schneidverfahrens in der Versorgungsleitung 7 unter einem gewissen Druck bis zum Rückschlagventil 31 vorhanden ist. Somit muss bei einem Neustart des Wasserdampf-Schneidverfahrens weniger Flüssigkeit 8 in die Versorgungsleitung 7 gepumpt werden bzw. weniger Druck in der Versorgungsleitung 7 aufgebaut werden. Dadurch ist ein schnellerer Neustart des Wasserdampf-Schneidverfahrens möglich.

Grundsätzlich ist zu erwähnen, dass bei den vorhergehenden Ausführungsvarianten der Behälter 5 unter keinem vordefinierten Druck steht.

Ein weiteres Ausführungsbeispiel des Wasserdampf-Schneidgerätes 1 mit der erfindungsgemäßen Flüssigkeitsrückführung 21 ist in Fig. 7 schematisch dargestellt. Dabei herrscht im Behälter 5 ein vordefinierter Druck, in ähnlicher Weise wie bei einer Gasflasche. Bevorzugt herrscht im Behälter 5 der für das Wasserdampf-Schneidverfahren notwendige Druck vor. In der am Behälter 5 angeordneten Versorgungsleitung 7 ist ein Hauptventil 33 angeordnet, welches von der Steuervorrichtung 3 angesteuert wird und lediglich beim Start des Wasserdampf-Schneidverfahrens öffnet und beim Beenden wieder schließt. Aufgrund des Druckes im Behälter 5 wird die Flüssigkeit 8 in Richtung des Brenners 6 gedrückt, wodurch auf einfache Art und Weise die Flüssigkeitsversorgung des Brenners 6 ohne Pumpe 23 realisiert wird.

Um eine Entlastung der Versorgungsleitung 7 und des Brenners 6 zu ermöglichen, ist wiederum eine Entlastungsleitung 22 an der Versorgungsleitung 7 angeordnet. Natürlich ist es auch möglich, die Entlastungsleitung 22 direkt am bzw. im Brenner 6 anzuordnen. In der Entlastungsleitung 22 ist ein Sperrventil 26 angeordnet, welches nach der Beendigung des Wasserdampf-Schneidverfahrens öffnet, während das Hauptventil 33 in der Versorgungsleitung 7 geschlossen wird. Die überschüssige und unter Druck stehende Flüssigkeit 8 wird über die Entlastungsleitung 22 vorzugsweise in einen weiteren Behälter 34 eingeleitet. Bevorzugt ist dieser weitere Behälter 34 austauschbar im Grundgerät 1a angeordnet, so dass der Benutzer die Flüssigkeit 8 einfach entsorgen oder wiederverwenden kann.

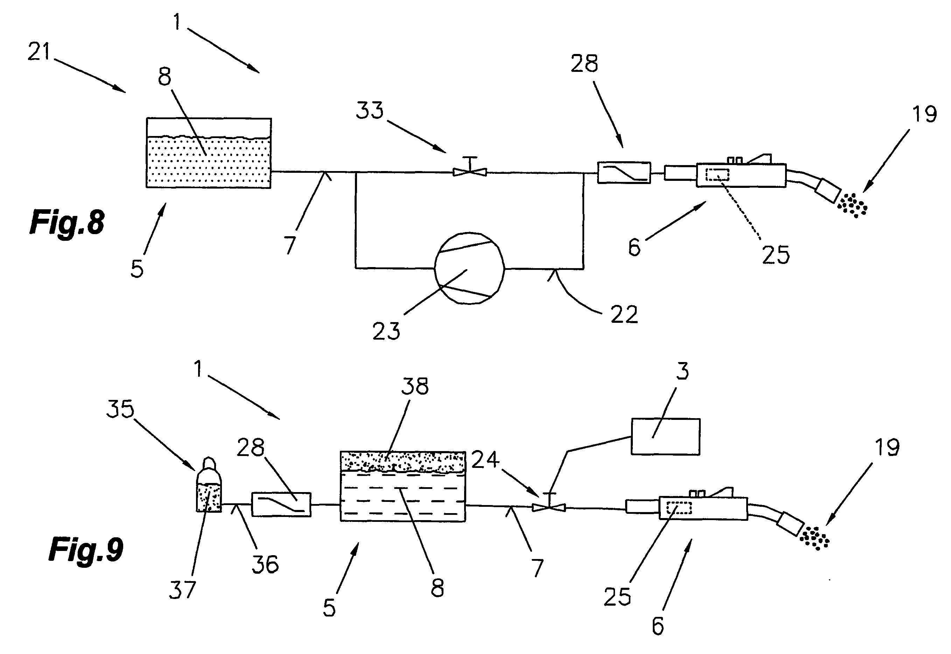

Auch bei der Ausführungsvariante gemäß Fig. 8 herrscht im Behälter 5 der Flüssigkeit 8 ein vordefinierter Druck. In der am Behälter 5 angeordneten Versorgungsleitung 7 ist wiederum das Hauptventil 33 angeordnet, welches beim Start des Wasserdampf-Schneidverfahrens öffnet, wodurch die Flüssigkeit 8 dem Brenner 6 zugeführt wird. Der Druck im Behälter ist jedoch größer ausgelegt, als jener Druck, welcher im Brenner 6 für das Wasserdampf-Schneidverfahren benötigt wird, weshalb vor dem Brenner 6 ein Druckminderer 28 angeordnet ist, der den Druck entsprechend anpasst.

Für die Entlastung im Brenner 6 und in der Versorgungsleitung 7 ist wiederum eine Entlastungsleitung 22 zwischen dem Druckminderer 28 und dem Hauptventil 33 angeordnet, und mündet zwischen dem Hauptventil 33 und dem Behälter 5 wieder in der Versorgungsleitung 7. In der Entlastungsleitung 22 ist eine Pumpe 23 angeordnet, deren Förderrichtung in Richtung des Behälters 5 weist. Nach Beendigung des Wasserdampf-Schneidverfahrens, also wenn das Hauptventil 33 geschlossen ist, wird die Flüssigkeit 8 von der Pumpe 23 über die Entlastungsleitung 22 zurück in den Behälter 5 gefördert.

Natürlich ist es auch möglich, einen Sensor 25 beispielsweise im Brenner 6 anzuordnen, um die tatsächlichen Druckwerte feststellen und dementsprechend reagieren zu können. In Abhängigkeit des vom Sensor 25 gemessenen Drucks wird der Druckminderer 28 angesteuert, so dass der Brenner 6 immer mit konstantem bzw. mit dem für den Wasserdampf-Schneidprozess erforderlichen Druck versorgt wird.

Natürlich ist es auch möglich entsprechend Fig. 9 anstelle des Behälters 5 einen Druckbehälter 35 einzusetzen. Im Druckbehälter 35, der durch eine Gasflasche oder eine Gaskartusche ausgebildet sein kann, herrscht ein vordefinierter Druck vor. Der Druckbehälter 35 ist über eine Gasleitung 36 mit dem Behälter 5 verbunden, in welchem die Flüssigkeit 8 für das Wasserdampf-Schneidverfahren angeordnet ist. An der dem Druckbehälter 35 gegenüberliegenden Seite des Behälters 5 ist die Versorgungsleitung 7 angeordnet, über welche die Flüssigkeit 8 dem Brenner 6 zugeführt wird.

Um den für das Wasserdampf-Schneidverfahren notwendigen Druck im Wasserdampf-Schneidgerät 1, bzw. im Brenner 6 und in der Versorgungsleitung 7, zu erzeugen, wird ein im Druckbehälter 35 befindliches Gas 37 in den Behälter 5 gedrückt. Dadurch wird im Behälter 5 ein Gaspolster 38 erzeugt, welcher die Flüssigkeit 8 mit dem notwendigen Druck in Richtung des Brenners 6 drückt. Zwischen dem Behälter 5 und dem Brenner 6 ist das von der Steuervorrichtung 3 angesteuerte Regelventil 24 angeordnet, welches nach dem Druckaufbau im Behälter 5 geöffnet wird, nachdem das Wasserdampf-Schneidverfahren gestartet werden kann. Um den Druck des Gaspolsters 38 im Behälter 5 zu steuern, kann beispielsweise ein Druckminderer 28 zwischen dem Druckbehälter 35 und dem Behälter 5 angeordnet sein. Dabei kann der Druckminderer 28 auch von der Steuervorrichtung 3 angesteuert werden. Des Weiteren ist es möglich, in der Gasleitung 36 und/oder im Behälter 5 und/oder in der Versorgungsleitung 7 und/oder im Brenner 6 einen Sensor 25 anzuordnen. Somit kann die Steuervorrichtung 3 aufgrund der vom Sensor 25 ermittelten Druckwerte den Druckminderer 28 und das Regelventil 24 ansteuern, bzw. regeln.

Dadurch kann anstelle der Pumpe 23 ein Regelventil 24 eingesetzt werden, wodurch natürlich eine enorme Kosteneinsparung erreicht wird. Bei einer derartigen Ausbildung nimmt jedoch der Druck im Druckbehälter 35 während des Wasserdampf-Schneidverfahrens, also bei Flüssigkeitsrückgang im Druckbehälter 35, ab, insbesondere wenn die Flüssigkeit 8 im Druckbehälter 35 fast vollständig entnommen worden ist. Da jedoch der Druck im Druckbehälter 35 wesentlich größer als der für das Wasserdampf-Schneidverfahren benötigte Druck ist, können die Druckverhältnisse in einfacher Art und Weise, wie beispielsweise über den Sensor 25 und die Steuervorrichtung 3, an den erforderlichen Druck angepasst werden.

Nachteilig bei dieser Ausführungsvariante ist allerdings, dass keine Entlastung des Brenners 6 und der Versorgungsleitung 7 nach Beendigung des Wasserdampf-Schneidverfahrens eintritt. Um eine solche Entlastung zu ermöglichen, kann wiederum eine Entlastungsleitung 22 eingesetzt werden, welche die entnommene Flüssigkeit 8 in einen weiteren Behälter 5 leitet. Somit wäre wiederum in einfacher Art und Weise das Wasserdampf-Schneidgerät 1 mit der erfindungsgemäßen Flüssigkeitsrückführung geschaffen.

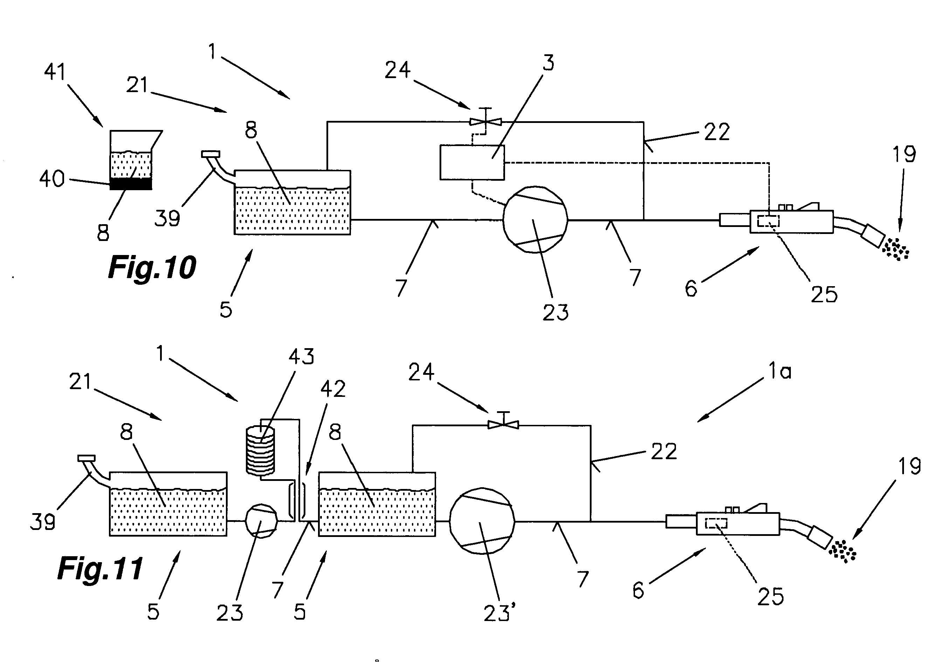

Fig. 10 zeigt ein weiteres Ausführungsbeispiel des erfindungsgemäßen Wasserdampf-Schneidgerätes 1 mit der Flüssigkeitsrückführung 21, bei dem die Flüssigkeit 8 mittels einer Pumpe 23 vom Behälter 5 über die Versorgungsleitung 7 zum Brenner 6 gefördert wird. Die Pumpe 23 kann von der Steuervorrichtung 3 geregelt werden, damit der nötige Druck für das Wasserdampf-Schneidverfahren im Brenner 6 und in der Versorgungsleitung 7 geschaffen wird. Der tatsächliche Druck kann wieder über einen Sensor 25 ermittelt werden und der Steuervorrichtung 3 weitergegeben werden.

Als Flüssigkeit 8 kann beispielsweise Leitungswasser verwendet werden, wobei jedoch eine Filterung zweckmäßig ist, durch welche Verunreinigungen entfernt werden können, durch welche der Brenner 6, die Versorgungsleitung 7 und die Pumpe 23 verschmutzt oder verkalkt werden könnten. Dies kann durch ein externes Filter 40, beispielsweise in einem Nachfüllbehälter 41, durch welchen die Flüssigkeit 8 vor dem Einfüllen in den Behälter 5 gefiltert wird, ermöglicht werden. Weiters ist im Behälter 5 beispielsweise ein Einfüllstutzen 39 angeordnet, über den Flüssigkeit 8 nachgefüllt werden kann.

Um eine Entlastung des Wasserdampf-Schneidgerätes 1 bzw. des Brenners 6 und der Versorgungsleitung 7 zu erreichen, ist zwischen dem Brenner 6 und der Pumpe 23 eine Entlastungsleitung 22 angeordnet. In der Entlastungsleitung 22 ist weiters ein Regelventil 24 angeordnet, welches von der Steuervorrichtung 3 geregelt wird. Somit kann über die Entlastungsleitung 22 und das Regelventil 24 der Brenner 6 und die Versorgungsleitung 7 nach Beendigung des Wasserdampf-Schneidverfahrens entlastet werden. Weiters ist es auch möglich, über das Regelventil 24 den Druckhaushalt im Brenner 6 und in der Versorgungsleitung 7 während des Wasserdampf-Schneidverfahrens zu steuern. Dies kann wiederum derart erfolgen, dass der Sensor 25 die aktuellen Druckwerte aufnimmt, diese an die Steuervorrichtung 3 weitergibt, und die Steuervorrichtung 3 das Regelventil 24 entsprechend den gewünschten Druckwerten regelt. Das Regelventil 24 wird bei zu hohem Druck im Brenner 6 und in der Versorgungsleitung 7 solange geöffnet, bis die Druckwerte den erforderlichen Druckwerten entsprechen.

Die Flüssigkeit 8 kann wieder in einfacher Weise über die Entlastungsleitung 22 in den Behälter 5 rückgeführt werden, da der notwendige Betriebsdruck erst in der Versorgungsleitung 7 nach der Pumpe 23 aufgebaut wird.

Um eine benutzerfreundliche Bedienung und auch Nachfüllmöglichkeit zu realisieren, ist es natürlich auch möglich, das Filter 40 im Behälter 5, und/oder in der Versorgungsleitung 7, und/oder in der Entlastungsleitung 22 und/oder kurz vor dem Brenner 6 anzuordnen.

Eine weitere Möglichkeit des erfindungsgemäßen Wasserdampf-Schneidgerätes 1 mit der Flüssigkeitsrückführung 21 ist in Fig. 11 schematisch dargestellt. Von dem Behälter 5 mit einem daran angeordneten Einfüllstutzen 39 wird die Flüssigkeit 8 über die Versorgungsleitung 7 und die darin angeordnete Pumpe 23 einem Verdampfer 42 zugeführt. Die Flüssigkeit 8 wird im Verdampfer 42 destilliert, d.h., auf Siedetemperatur erhitzt und in daraus resultierendem gasförmigen Zustand vom Verdampfer 42 in die Versorgungsleitung 7 gefördert. Nach dem Verdampfer 42 ist eine Gegenstromkühlung 43 in der Versorgungsleitung 7 angeordnet, wodurch die im gasförmigen Zustand befindliche Flüssigkeit 8 wieder abgekühlt wird und somit wieder in den flüssigen Zustand übergeht. Nach der Gegenstromkühlung 43 wird die Flüssigkeit 8 in einen weiteren Behälter 5 gefördert, von dem die Flüssigkeit 8 über die weitere Pumpe 23' dem Brenner 6 zugeführt wird.

Die Entlastung erfolgt wiederum dermaßen, dass zwischen Brenner 6 und der weiteren Pumpe 23' eine Entlastungsleitung 22 angeordnet ist. In der Entlastungsleitung 22 ist ein Regelventil 24 angeordnet, über welches einerseits die Entlastung und andererseits der Druckhaushalt gesteuert werden kann. Die Flüssigkeit 8 wird dabei wiederum in den weiteren Behälter 5 rückgeführt.

Natürlich ist es auch bei diesem Aufbau des erfindungsgemäßen Wasserdampf-Schneidgerätes 1 möglich, einen Sensor 25 anzuordnen und über diesen den Druck im Brenner 6 und in der Versorgungsleitung 7 zu regeln. Die vom Sensor 25 ermittelten Druckwerte werden an die Steuervorrichtung 3 übermittelt, wodurch die Pumpe 23 und/oder das Regelventil 24 und/oder das Sperrventil 26 und/oder den Strömungswiderstand 27 und/oder den Druckminderer 28 den Werten entsprechend geregelt werden kann. Somit ist eine automatische Druckanpassung während des Wasserdampf-Schneidverfahrens möglich und nach dem Wasserdampf-Schneidverfahren eine sichere und schnelle Entlastung des Wasserdampf-Schneidverfahrens gegeben.

Im Behälter 5 und/oder im Behälter 34 und/oder im Druckbehälter 35 können auch Messinstrumente zur Erfassung des jeweiligen Füllstandes angeordnet sein. Dadurch kann rechtzeitig eine zu geringe Menge an Flüssigkeit 8 erkannt und entsprechend reagiert werden.

## Patentansprüche

1. Wasserdampf-Schneidgerät (1) mit zumindest einem Behälter (5) für eine Flüssigkeit (8), einer Stromquelle (2), einer Steuervorrichtung (3), und einem über eine Versorgungsleitung (7) mit dem Behälter (5) verbundenen Brenner (6) zur Erzeugung eines über eine Düse austretenden Wasserdampfstrahls, **dadurch gekennzeichnet, dass** eine mit der Versorgungsleitung (7) in Verbindung stehende Entlastungsleitung (22) zur Entlastung der Versorgungsleitung (7) und/oder des Brenners (6) bei bzw. nach Beendigung des Wassdampf-Schneidverfahrens angeordnet ist, wobei der Querschnitt der Entlastungsleitung (22) größer als der Querschnitt der Düsenaustrittsöffnung im Brenner (6) ist.

2. Wasserdampf-Schneidgerät (1) nach Anspruch 1, **dadurch gekennzeichnet, dass** die Entlastungsleitung (22) mit der Versorgungsleitung (7) im Brenner (6) oder im Bereich des Brenners (6) verbunden ist.

3. Wasserdampf-Schneidgerät (1) nach Anspruch 1 oder 2, **dadurch gekennzeichnet, dass** der Querschnitt der Entlastungsleitung (22) größer als der Querschnitt der Versorgungsleitung (7) ist.

4. Wasserdampf-Schneidgerät (1) nach einem oder mehreren der Ansprüche 1 bis 3, **dadurch gekennzeichnet, dass** in der Versorgungsleitung (7) eine Pumpe (23) zum Aufbau des im Brenner (6) bzw. in der dem Brenner (6) zugewandten Versorgungsleitung (7) notwendigen Betriebsdruckes der Flüssigkeit (8) angeordnet ist.

5. Wasserdampf-Schneidgerät (1) nach einem oder mehreren der Ansprüche 1 bis 4, **dadurch gekennzeichnet, dass** in der Entlas-tungsleitung (22) ein Sperrventil (26) angeordnet ist.

6. Wasserdampf-Schneidgerät (1) nach einem oder mehreren der Ansprüche 1 bis 5, **dadurch gekennzeichnet, dass** in der Entlas-tungsleitung (22) ein Regelventil (24) zur Regelung des Drucks im Brenner (6) und/oder in der Versorgungsleitung (7), sowie der Entlastung der Versorgungsleitung (7) angeordnet ist.

7. Wasserdampf-Schneidgerät (1) nach einem öder mehreren der Ansprüche 1 bis 6, **dadurch gekennzeichnet, dass** in der Entlastungsleitung (22) ein Strömungswiderstand (27) angeordnet ist.

8. Wasserdampf-Schneidgerät (1) nach einem oder mehreren der Ansprüche 1 bis 7, **dadurch gekennzeichnet, dass** ein Druckminderer (28) zur Reduktion des Druckes der Flüssigkeit (8) auf einen gewünschten Betriebsdruck vorgesehen ist.

9. Wasserdampf-Schneidgerät (1) nach einem oder mehreren der Ansprüche 4 bis 8, **dadurch gekennzeichnet, dass** die Pumpe (23) zur Förderung der Flüssigkeit (8) in zwei Flussrichtungen, und zwar in Richtung des Brenners (6) und in die entgegengesetzte Richtung ausgebildet ist.

10. Wasserdampf-Schneidgerät (1) nach einem oder mehreren der Ansprüche 1 bis 9, **dadurch gekennzeichnet, dass** die Entlastungsleitung (22) mit dem Behälter (5) verbunden ist, so dass die Flüssigkeit (8) bei der Entlastung über die Entlastungsleitung (22) in den Behälter (5) rückführbar ist.

11. Wasserdampf-Schneidgerät (1) nach einem oder mehreren der Ansprüche 1 bis 10, **dadurch gekennzeichnet, dass** der Behälter (5) durch eine Gasflasche oder Gaskartusche gebildet ist.

12. Wasserdampf-Schneidgerät (1) nach einem oder mehreren der Ansprüche 1 bis 11, **dadurch gekennzeichnet, dass** im Behälter (5) ein vordefinierter Druck aufgebaut ist.

13. Wasserdampf-Schneidgerät (1) nach einem oder mehreren der Ansprüche 1 bis 12, **dadurch gekennzeichnet, dass** in der Versorgungsleitung (7) ein Rückschlagventil (31) angeordnet ist.

14. Wasserdampf-Schneidgerät (1) nach einem oder mehreren der Ansprüche 1 bis 13, **dadurch gekennzeichnet, dass** in der Entlastungsleitung (22) ein Rückschlagventil (31') angeordnet ist.

15. Wasserdampf-Schneidgerät (1) nach Anspruch 13 oder 14, **dadurch gekennzeichnet, dass** das in der Versorgungsleitung (7) angeordnete Rückschlagventil (31) zur Öffnung bei einem Druck von 0,01 bar bis 10 bar, insbesondere 1 bar, ausgebildet ist.

16. Wasserdampf-Schneidgerät (1) nach einem oder mehreren der Ansprüche 13 bis 15, **dadurch gekennzeichnet, dass** das in der Entlastungsleitung (22) angeordnete Rückschlagventil (31') zur Öffnung bei einem Druck von 1 mbar bis 1000 mbar, insbesondere 50 mbar, ausgebildet ist.

17. Wasserdampf-Schneidgerät (1) nach einem oder mehreren der Ansprüche 1 bis 16, **dadurch gekennzeichnet, dass** die Flüssigkeit (8) durch Wasser gebildet ist.

18. Wasserdampf-Schneidgerät (1) nach einem oder mehreren der Ansprüche 1 bis 17, **dadurch gekennzeichnet, dass** ein Filter (40) zur Reinigung der Flüssigkeit (8) vorzugsweise im Behälter (5) und/oder in der Versorgungsleitung (7) und/oder in der Entlastungsleitung (22) und/oder einem Nachfüllbehälter (41) angeordnet ist.

19. Wasserdampf-Schneidgerät (1) nach einem oder mehreren der Ansprüche 1 bis 18, **dadurch gekennzeichnet, dass** ein Sensor (25) zur Erfassung des Drucks im Brenner (6) und/oder in der Versorgungsleitung (7) und/oder in der Entlastungsleitung (22) vorgesehen ist.

20. Wasserdampf-Schneidgerät (1) nach Anspruch 19, **dadurch gekennzeichnet, dass** der Sensor (25) mit der Steuervorrichtung (3) verbunden ist.

21. Wasserdampf-Schneidgerät (1) nach Anspruch 20, **dadurch gekennzeichnet, dass** die Steuervorrichtung (3) mit der Pumpe (23) und/oder dem Regelventil (24) und/oder dem Sperrventil (26) und/oder dem Strömungswiderstand (27) und/oder dem Druckminderer (28) zur druckabhängigen Regelung verbunden ist.

22. Wasserdampf-Schneidgerät (1) nach einem oder mehreren der Ansprüche 1 bis 21, **dadurch gekennzeichnet, dass** ein Verdampfer (42) in der Versorgungsleitung (7) angeordnet ist.

23. Wasserdampf-Schneidgerät (1) nach einem oder mehreren der Ansprüche 1 bis 22, **dadurch gekennzeichnet, dass** eine Einrichtung zur Erfassung und Verarbeitung der Betriebsparameter des Wasserdampf-Schneidgeräts (1) vorgesehen ist.

## Claims

1. A steam cutting device (1) including at least one container (5) for a liquid (8), a current source (2), a control device (3) and a burner (6) connected with the container (5) via a supply line (7) to generate a steam jet emerging through a nozzle, **characterized in that** a relief line (22) communicating with the supply line (7) is provided for relieving the supply line (7) and/or the burner (6) at or after the completion of the steam cutting procedure, with the cross section of the relief line (22) being larger than the cross section of the nozzle outlet opening in the burner (6).

2. A steam cutting device (1) according to claim 1, **characterized in that** the relief line (22) is connected with the supply line (7) within the burner (6) or in the region of the burner (6).

3. A steam cutting device (1) according to claim 1 or 2, **characterized in that** the cross section of the relief line (22) is larger than the cross section of the supply line (7).

4. A steam cutting device (1) according to one or several of claims 1 to 3, **characterized in that** a pump (23) for building up the liquid operating pressure required in the burner (6) and in the supply line (7) facing the burner (6) is arranged in the supply line (7).

5. A steam cutting device (1) according to one or several of claims 1 to 4, **characterized in that** a check valve (26) is arranged in the relief line (22).

6. A steam cutting device (1) according to one or several of claims 1 to 5, **characterized in that** a control valve (24) for controlling the pressure in the burner (6) and/or in the supply line (7) as well as the relief of the supply line (7) is arranged in the relief line (22).

7. A steam cutting device (1) according to one or several of claims 1 to 6, **characterized in that** a flow resistor (27) is arranged in the relief line (22).

8. A steam cutting device (1) according to one or several of claims 1 to 7, **characterized in that** a pressure reducer (28) for reducing the pressure of the liquid (8) to a desired operating pressure is provided.

9. A steam cutting device (1) according to one or several of claims 4 to 8, **characterized in that** the pump (23) is configured to deliver the liquid (8) in two flow directions, namely in the direction of the burner (6) and in the opposite direction.

10. A steam cutting device (1) according to one or several of claims 1 to 9, **characterized in that** the relief line (22) is connected with the container (5) in a manner that, upon relief, the liquid (8) is recirculatable into the container (5) via the relief line (22).

11. A steam cutting device (1) according to one or several of claims 1 to 10, **characterized in that** the container (5) is formed by a gas bottle or gas cartridge.

12. A steam cutting device (1) according to one or several of claims 1 to 11, **characterized in that** a predefined pressure is built up in the container (5).

13. A steam cutting device (1) according to one or several of claims 1 to 12, **characterized in that** a nonreturn valve (31) is arranged in the supply line (7).

14. A steam cutting device (1) according to one or several of claims 1 to 13, **characterized in that** a nonreturn valve (31') is arranged in the relief line (22).

15. A steam cutting device (1) according to claim 13 or 14, **characterized in that** the nonreturn valve (31) arranged in the supply line (7) is designed to open at a pressure of from 0.01 bar to 10 bar, in particular 1 bar.

16. A steam cutting device (1) according to one or several of claims 13 to 15, **characterized in that** the nonreturn valve (31') arranged in the relief line (22) is designed to open at a pressure of from 1 mbar to 1000 mbar, in particular 50 mbar.

17. A steam cutting device (1) according to one or several of claims 1 to 16, **characterized in that** the liquid (8) is comprised of water.

18. A steam cutting device (1) according to one or several of claims 1 to 17, **characterized in that** a filter (40) for cleaning the liquid (8) is preferably arranged in the container (5) and/or in the supply line (7) and/or in the relief line (22) and/or in a refill container (41).

19. A steam cutting device (1) according to one or several of claims 1 to 18, **characterized in that** a sensor (25) for detecting the pressure in the burner (6) and/or in the supply line (7) and/or in the relief line (22) is provided.

20. A steam cutting device (1) according to claim 19, **characterized in that** the sensor (25) is connected with the control device (3).

21. A steam cutting device (1) according to claim 20, **characterized in that** the control device (3) is connected with the pump (23) and/or the control valve (24) and/or the check valve (26) and/or the flow resistor (27) and/or the pressure reducer (28) for a pressure-dependent control.

22. A steam cutting device (1) according to one or several of claims 1 to 21, **characterized in that** an evaporator (42) is installed in the supply line (7).

23. A steam cutting device (1) according to one or several of claims 1 to 22, **characterized in that** a means for detecting and processing the operating parameters of the steam cutting device (1) is provided.

## Revendications

1. Outil de coupe à vapeur d'eau (1) avec au moins un récipient (5) pour un liquide (8), une source de courant (2), un dispositif de commande (3) et un chalumeau (6) relié au récipient (5) par une conduite d'alimentation (7), pour produire un jet de vapeur d'eau sortant d'une buse, **caractérisé en ce qu'**une conduite de décharge (22), en liaison avec la conduite d'alimentation (7), est prévue pour décharger la conduite d'alimentation (7) et/ou le chalumeau (6) pendant ou après achèvement du processus de coupe à la vapeur d'eau, la section de la conduite de décharge (22) étant supérieure à la section de l'orifice de sortie de la buse dans le chalumeau (6).

2. Outil de coupe à vapeur d'eau (1) selon la revendication 1, **caractérisé en ce que** la conduite de décharge (22) est reliée à la conduite d'alimentation (7) dans le chalumeau (6) ou dans la zone du chalumeau (6).

3. Outil de coupe à vapeur d'eau (1) selon l'une quelconque des revendications 1 ou 2, **caractérisé en ce que** la section de la conduite de décharge (22) est supérieure à la section de la conduite d'alimentation (7).

4. Outil de coupe à vapeur d'eau (1) selon une ou plusieurs des revendications 1 à 3, **caractérisé en ce que** dans la conduite d'alimentation (7) est disposée une pompe (23) pour constituer la pression de service du liquide (8), nécessaire dans le chalumeau (6) ou dans la conduite d'alimentation (7) tournée vers le chalumeau (6).

5. Outil de coupe à vapeur d'eau (1) selon une ou plusieurs des revendications 1 à 4, **caractérisé en ce qu'**une vanne d'arrêt (26) est disposée dans la conduite de décharge (22).

6. Outil de coupe à vapeur d'eau (1) selon une ou plusieurs des revendications 1 à 5, **caractérisé en ce que** dans la conduite de décharge (22) est disposée une soupape de régulation (24) pour réguler la pression dans le chalumeau (6) et/ou dans la conduite d'alimentation (7), ainsi que la décharge de la conduite d'alimentation (7).

7. Outil de coupe à vapeur d'eau (1) selon une ou plusieurs des revendications 1 à 6, **caractérisé en ce qu'**une résistance à l'écoulement (27) est disposée dans la conduite de décharge (22).

8. Outil de coupe à vapeur d'eau (1) selon une ou plusieurs des revendications 1 à 7, **caractérisé en ce qu'**un réducteur de pression (28) est prévu pour réduire la pression du liquide (8) à une pression de service voulue.

9. Outil de coupe à vapeur d'eau (1) selon une ou plusieurs des revendications 4 à 8, **caractérisé en ce que** la pompe (23) est conçue pour refouler le liquide (8) dans deux directions d'écoulement, à savoir en direction du chalumeau (6) et dans la direction opposée.

10. Outil de coupe à vapeur d'eau (1) selon une ou plusieurs des revendications 1 à 9, **caractérisé en ce que** la conduite de décharge (22) est reliée au récipient (5), ce qui fait que lors de la décharge, le liquide (8) peut être renvoyé dans le récipient (5), à travers la conduite de décharge (22).

11. Outil de coupe à vapeur d'eau (1) selon une ou plusieurs des revendications 1 à 10, **caractérisé en ce que** le récipient (5) est formé par une bouteille de gaz ou une cartouche de gaz.

12. Outil de coupe à vapeur d'eau (1) selon une ou plusieurs des revendications 1 à 11, **caractérisé en ce que** dans le récipient (5) est constituée une pression prédéfinie.

13. Outil de coupe à vapeur d'eau (1) selon une ou plusieurs des revendications 1 à 12, **caractérisé en ce qu'**un clapet de non-retour (31) est disposé dans la conduite d'alimentation (7).

14. Outil de coupe à vapeur d'eau (1) selon une ou plusieurs des revendications 1 à 13, **caractérisé en ce qu'**un clapet de non-retour (31') est disposé dans la conduite de décharge (22).

15. Outil de coupe à vapeur d'eau (1) selon l'une quelconque des revendications 13 ou 14, **caractérisé en ce que** le clapet de non-retour (31), disposé dans la conduite d'alimentation (7), est conçu pour s'ouvrir à une pression comprise entre 0,01 bar et 10 bars, en particulier de 1 bar.

16. Outil de coupe à vapeur d'eau (1) selon une ou plusieurs des revendications 13 à 15, **caractérisé en ce que** le clapet de non-retour (31'), disposé dans la conduite de décharge (22), est conçu pour s'ouvrir à une pression comprise entre 1 mbar et 1000 mbars, en particulier de 50 mbars.

17. Outil de coupe à vapeur d'eau (1) selon une ou plusieurs des revendications 1 à 16, **caractérisé en ce que** le liquide (8) est formé par de l'eau.

18. Outil de coupe à vapeur d'eau (1) selon une ou plusieurs des revendications 1 à 17, **caractérisé en ce qu'**un filtre (40) pour l'épuration du liquide (8) est disposé de préférence dans le récipient (5) et/ou dans la conduite d'alimentation (7) et/ou dans la conduite de décharge (22) et/ou dans un récipient de remise à niveau (41).

19. Outil de coupe à vapeur d'eau (1) selon une ou plusieurs des revendications 1 à 18, **caractérisé en ce qu'**un capteur (25) est prévu pour relever la pression dans le chalumeau (6) et/ou dans la conduite d'alimentation (7) et/ou dans la conduite de décharge (22).

20. Outil de coupe à vapeur d'eau (1) selon la revendication 19, **caractérisé en ce que** le capteur (25) est relié au dispositif de commande (3).

21. Outil de coupe à vapeur d'eau (1) selon la revendication 20, **caractérisé en ce que** le dispositif de commande (3) est relié à la pompe (23) et/ou à la soupape de régulation (24) et/ou à la vanne d'arrêt (26) et/ou à la résistance à l'écoulement (27) et/ou au réducteur de pression (28) pour la régulation dépendant de la pression.

22. Outil de coupe à vapeur d'eau (1) selon une ou plusieurs des revendications 1 à 21, **caractérisé en ce qu'**un évaporateur (42) est prévu et disposé dans la conduite d'alimentation (7).

23. Outil de coupe à vapeur d'eau (1) selon une ou plusieurs des revendications 1 à 22, **caractérisé en ce qu'**il est prévu un équipement pour relever et traiter les paramètres de fonctionnement de l'outil de coupe à vapeur d'eau (1).
